# EUROPEAN PATENT APPLICATION

(11) **EP 4 779 453 A1**
(43) Date of publication of application: **22.07.2026**
(21) Application number: 25749595.2
(22) Date of filing: 06.08.2025
(51) Int. Cl.: G06F 3/06, G06F 1/26, G06F 12/0888, G01R 31/382

(54) **ELECTRONIC DEVICE FOR PERFORMING DATA INPUT/OUTPUT OPERATIONS AND NON-TRANSITORY COMPUTER-READABLE STORAGE MEDIUM**

(30) Priority: 11.11.2024 KR 20240159153; 26.12.2024 KR 20240197745
(71) Applicant: Samsung Electronics Co., Ltd., Suwon-si, Gyeonggi-do 16677 (KR)
(72) Inventor: LEE, Woojoong, Suwon-si, Gyeonggi-do 16677 (KR); GIL, Yeongjin, Suwon-si, Gyeonggi-do 16677 (KR); SEO, Sungjong, Suwon-si, Gyeonggi-do 16677 (KR); JEONG, Sunmin, Suwon-si, Gyeonggi-do 16677 (KR); JUNG, Wonsuk, Suwon-si, Gyeonggi-do 16677 (KR); HYUN, Sunghwan, Suwon-si, Gyeonggi-do 16677 (KR)
(74) Representative: Walaski, Jan Filip
(86) International application number: PCT/KR2025/011809
(87) International publication number: WO 2026/100902

(57) **Abstract**

An electronic device includes at least one processor including processing circuitry, and memory, including one or more storage devices, storing instructions. The one or more storage devices include a storage device including a cache memory. The instructions cause the electronic device to identify a power state of the electronic device, and, based on the power state satisfying a reference condition, transmit, from the at least one processor to the storage device, a command to disable the cache memory.

## Description

### [Technical Field]

The following description relates to an electronic device and a non-transitory computer readable storage medium performing data input/output operation.

### [Background Art]

A cache memory may be used to improve data transmission speed between a processor and memory. For example, an electronic device may improve the data transmission speed by storing data provided from the processor in the memory through the cache memory.

The above-described information may be provided as related art for the purpose of helping understanding of the present disclosure. No claim or determination is raised as to whether any of the above-described description may be applied as prior art related to the present disclosure.

### [Disclosure]

### [Technical Solution]

An electronic device is provided. The electronic device may include at least one processor including processing circuitry, and memory, including one or more storage devices, storing instructions. The one or more storage devices may include a storage device including a cache memory. The instructions, when executed by the at least one processor individually or collectively, may cause the electronic device to identify a power state of the electronic device. The instructions, when executed by the at least one processor individually or collectively, may cause the electronic device to transmit, based on the power state satisfying a reference condition, from the at least one processor to the storage device, a command to disable the cache memory.

An electronic device is provided. The electronic device may include at least one processor including processing circuitry, and memory, including one or more storage devices, storing instructions. The one or more storage devices may include a storage device including a cache memory. The instructions, when executed by the at least one processor individually or collectively, may cause the electronic device to identify a power state of the electronic device. The instructions, when executed by the at least one processor individually or collectively, may cause the electronic device to transmit, based on the power state satisfying a reference condition, from the at least one processor to the storage device, data and a command associated with the data. The command may be used for storing the data to the storage device by bypassing the cache memory.

A non-transitory computer readable storage medium is provided. The non-transitory computer readable storage medium may store one or more programs. The one or more programs may include instructions to, when executed by an electronic device with at least one processor and a storage device including a cache memory, cause the electronic device to identify a power state of the electronic device. The one or more programs may include instructions to, when executed by the electronic device, cause the electronic device to transmit, based on the power state satisfying a reference condition, from the at least one processor to the storage device, a command to disable the cache memory.

A non-transitory computer readable storage medium is provided. The non-transitory computer readable storage medium may store one or more programs. The one or more programs may include instructions to, when executed by an electronic device with at least one processor and a storage device including a cache memory, cause the electronic device to identify a power state of the electronic device. The one or more programs may include instructions to, when executed by the electronic device, cause the electronic device to transmit, based on the power state satisfying a reference condition, from the at least one processor to the storage device, data and a command associated with the data. The command may be used to store the data to the storage device by bypassing the cache memory.

### [Description of the Drawings]

FIG. 1 is a schematic view of an exemplary electronic device.
FIG. 2 illustrates an example of a data input/output environment of an electronic device.
FIG. 3 illustrates an example of a hierarchical structure related to a storage device.
FIG. 4 is a flowchart illustrating an example of an operation method of storing data to a storage device based on a power state of an electronic device.
FIG. 5 is an example for describing an operation of storing data to a storage device through a cache memory.
FIG. 6 is an example for describing an operation of bypassing a cache memory based on a command for disabling the cache memory.
FIG. 7 is a flowchart illustrating another example of an operation method of storing data to a storage device based on a power state of an electronic device.
FIG. 8 is an example for describing an operation of storing data to a storage device based on a command associated with the data.
FIG. 9 is a flowchart illustrating an example of an operation method of selectively bypassing a cache memory based on a command associated with data.
FIG. 10 is a block diagram of an electronic device in a network environment according to various embodiments.

### [Mode for Invention]

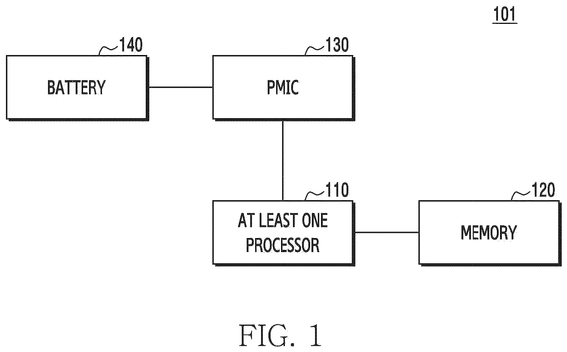

FIG. 1 is a schematic view of an exemplary electronic device.

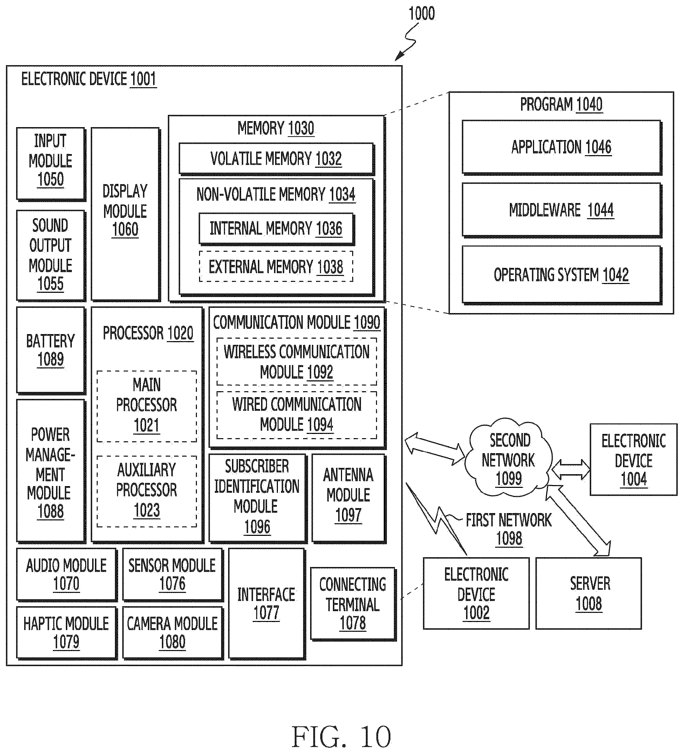

Referring to FIG. 1, an electronic device 101 may include at least one processor 110, memory 120, a power management integrated circuitry (PMIC) 130, and a battery 140. The electronic device 101 may include at least a portion of an electronic device 1001 of FIG. 10 or may correspond to the at least a portion of the electronic device 1001 of FIG. 10.

The at least one processor 110 may include processing circuitry. The at least one processor 110 may include a single processor or multiple processors. The at least one processor 110 may control the memory 120 and/or one or more components (e.g., the PMIC 130) of the electronic device 101. For example, the at least one processor 110 may include at least a portion of a processor 1020 of FIG. 10 or may correspond to the at least a portion of the processor 1020 of FIG. 10.

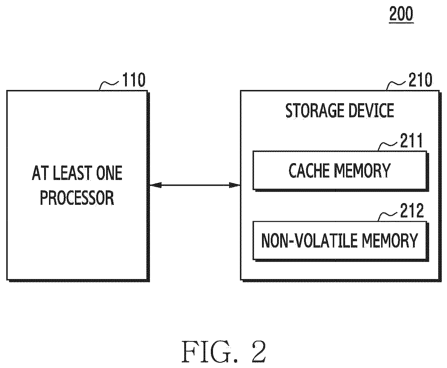

The memory 120 may store one or more programs configured to be executed by the at least one processor 110 individually and/or collectively. The one or more programs may include instructions. The instructions may cause the electronic device 101 to perform operations described with reference to FIGS. 2 to 9. The memory 120 may include one or more storage devices. For example, the one or more storage devices may include a storage device including a cache memory and a non-volatile memory. At least a portion of the one or more programs may be available to manage, control, and/or execute a file system and a storage device driver, described below. For example, the memory 120 may include at least a portion of memory 1030 of FIG. 10 or may correspond to the at least a portion of the memory 1030 of FIG. 10.

The PMIC 130 may manage power supplied to the electronic device 101. For example, the PMIC 130 may distribute power to at least one component of the electronic device 101 based on the power supplied from the battery 140 and/or an external power source (not illustrated). For example, the PMIC 130 may detect a voltage, a current, a resistance, and/or a temperature of the battery 140.

Information on the detected voltage, current, resistance, and/or temperature of the battery 140 may be transmitted to the at least one processor 110. For another example, the PMIC 130 may identify a voltage from the external power source. Information on the identified voltage may be transmitted to the at least one processor 110. For example, the PMIC 130 may be implemented as at least a portion of a power management module 1088 of FIG. 10.

The battery 140 may supply power to the at least one component of the electronic device 101 through the PMIC 130. For example, the battery 140 may be described as a rechargeable battery that supplies power to the at least one processor 110 and the memory 120. However, it is not limited thereto. For example, the battery 140 may include a non-rechargeable battery. For example, the battery 140 may include at least a portion of a battery 1089 of FIG. 10 or may correspond to the at least a portion of the battery 1089 of FIG. 10.

FIG. 2 illustrates an example of a data input/output environment of an electronic device.

Referring to FIG. 2, a data input/output environment 200 may include at least one processor 110 and a storage device 210.

The at least one processor 110 may perform a data input/output operation of an electronic device 101 by performing an operation of storing data to the storage device 210 and an operation of reading the data stored to the storage device 210. The at least one processor 110 may transmit commands related to the data input/output operation to the storage device 210. For example, the at least one processor 110 may be configured to function as a host device (or a host) in association with the storage device 210.

The storage device 210 may include a cache memory 211 and a non-volatile memory 212. The cache memory 211 may be described as a volatile memory that loses the stored data when power supplied to the cache memory 211 is cut off. As a non-limiting example, the cache memory 211 may include a static random access memory (SRAM). The non-volatile memory 212 may maintain the stored data regardless of (or independently of) cutting off of power supplied to the non-volatile memory 212. As a non-limiting example, the non-volatile memory 212 may include a NAND flash. As a non-limiting example, the storage device 210 may be described as one chip including the cache memory 211 and the non-volatile memory 212. For example, the storage device 210 may be described as a solid state drive (SSD), a universal flash storage (UFS), or an embedded multimedia card (eMMC). However, it is not limited thereto. The present disclosure may be applied to the electronic device including a non-volatile memory and a cache memory associated with the non-volatile memory. The storage device 210 may include at least a portion of memory 120 or may correspond to the at least a portion of the memory 120.

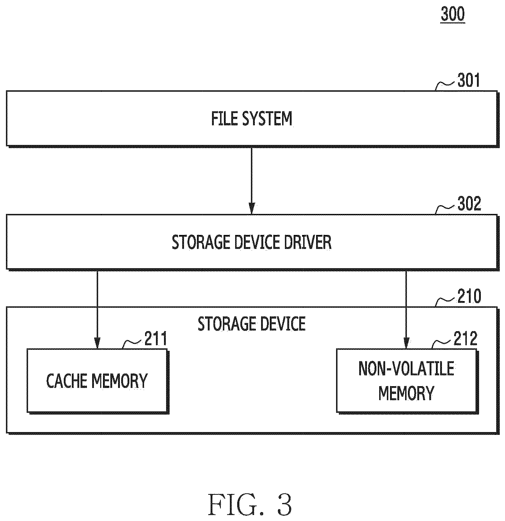

FIG. 3 illustrates an example of a hierarchical structure related to a storage device.

Referring to FIG. 3, a hierarchical structure 300 related to a storage device 210 may include a file system 301, a storage device driver 302, and the storage device 210. The storage device 210 may include a cache memory 211 and a non-volatile memory 212.

The file system 301 may be described as software for managing data stored to the storage device 210 in units of a file. For example, the file may include data and metadata associated with the data. For example, the metadata may include information on the file system 301 and/or an attribute of the file. For example, the metadata may include information on a file system superblock, a check point, a block, and/or a file allocation. The information on the file system superblock may include information on a type, a size, and/or the number of available blocks of the file system 301. The information on the check point may include information on a time point when a change to the file occurs, which is identified based on the file system 301. The information on the block may include information on the size of the block and/or an address of the block, which is a unit for physically storing data with respect to the file system 301. The information on the file allocation may include information on a type in which the file is allocated to the block. For example, the metadata may include information on an inode of the file and/or an inode for a directory associated with the file. The information on the inode of the file may include information on a type of the file, a size of the file, and/or a storage location of data included in the file, and the like. The directory may be described as a file for managing the file or another directory. The information on the inode of the directory may include information on a type of the directory, a size of the directory, and/or a storage location of data included in the directory, and the like. For example, the file system 301 may be described as software stored in memory 120 (e.g., the storage device 210) that is executed by at least one processor 110.

The storage device driver 302 may control a data input/output operation related to the cache memory 211 and the non-volatile memory 212 based on a command received from the file system 301. For example, the storage device driver 302 may be described as software stored in the memory 120 (e.g., the storage device 210) that is executed by the at least one processor 110.

For example, an electronic device 101 may increase data input/output speed of the storage device 210 by storing data provided by the at least one processor 110 in the non-volatile memory 212 through the cache memory 211 using the file system 301 and the storage device driver 302.

For example, the electronic device 101 may increase reliability of the data stored to the storage device 210 by bypassing the cache memory 211 based on a power state of the electronic device 101 to store the data provided by the at least one processor 110 in the non-volatile memory 212 using the file system 301 and the storage device driver 302.

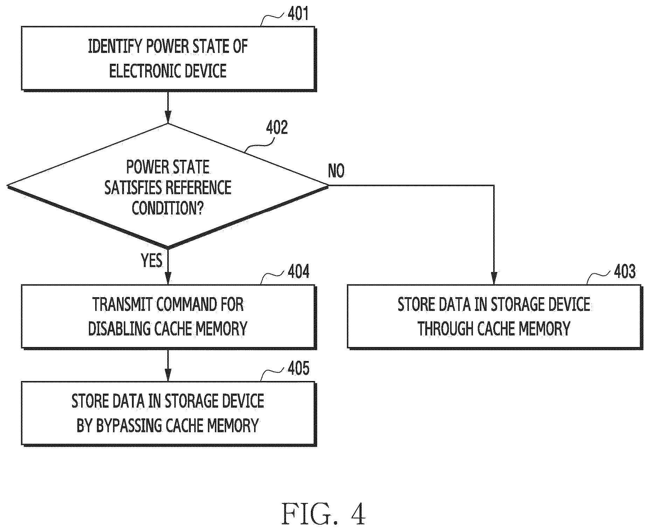

An operation method of storing data to the storage device based on the power state of the electronic device will be described with reference to FIG. 4.

FIG. 4 is a flowchart illustrating one example of an operation method of storing data to a storage device based on a power state of an electronic device.

Referring to FIG. 4, in operation 401, at least one processor 110 may identify a power state of an electronic device 101. The power state may be described as a state related to a process in which power of a battery 140 is supplied to electronic components of the electronic device 101 through a PMIC 130. For example, the power state of the electronic device 101 may include a state related to a power-off of the electronic device 101 and a state related to the power of the battery 140 of the electronic device 101.

For example, the power state may include a state related to a power-off sequence executed by the at least one processor 110. The power-off sequence may be performed for ceasing or terminating to provide the power of the battery 140 to the electronic components of the electronic device 101 through the PMIC 130. As a non-limiting example, the at least one processor 110 may terminate an application being executed using an operating system (OS) while the power-off sequence is being performed, and may cut off the power provided to the electronic components of the electronic device 101 using the PMIC 130. For example, the operating system may be described as software stored in memory 120, which is executed by the at least one processor 110. For example, the at least one processor 110 may identify the power state of the electronic device 101 by detecting (or by identifying) (or by perceiving) the power-off sequence of the electronic device 101 started or to be started. For example, the at least one processor 110 may identify the power state of the electronic device 101 by identifying (or by determining) (or by detecting) (or by perceiving) that the power-off sequence of the electronic device 101 has started or is to be started. An operation method of detecting the power-off sequence may be described in various ways according to an embodiment. For example, the at least one processor 110 may identify an update of at least one software application of the electronic device 101 performed or to be performed. The at least one processor 110 may detect the power-off sequence of the electronic device 101 to be started based on the update of the at least one software application. For another example, the at least one processor 110 may identify a user input for turning off the electronic device 101. The at least one processor 110 may detect the power-off sequence of the electronic device 101 started or to be started based on the user input.

For another example, the power state may include a state of charge (SoC) of the battery 140. For example, the SoC may indicate a percentage according to the state of charge of the battery 140. As a non-limiting example, the at least one processor 110 may identify the SoC of the battery 140 based on information on a voltage, a current, a resistance, and/or a temperature of the battery 140 detected by the PMIC 130. An operation method of identifying the SoC may be described in various ways according to an embodiment. For example, the at least one processor 110 may identify the SoC of the battery 140 by using a voltage measurement method using the voltage of the battery 140, a current integration method using the current of the battery 140, an impedance measurement method using a resistance change of the battery 140, and/or an extended Kalman filter method using the voltage, the current, and the temperature of the battery 140. For example, the at least one processor 110 may identify the power state of the electronic device 101 by identifying the SoC of the battery 140 that supplies power to a storage device 210. However, it is not limited thereto. For example, the at least one processor 110 may identify the power state of the electronic device 101 by identifying a voltage from an external power source of the electronic device 101.

As described above, the at least one processor 110 may identify the power state of the electronic device 101 by performing an operation of detecting the power-off sequence of the electronic device 101, an operation of identifying the SoC of the battery 140, and/or an operation of identifying the voltage from the external power source.

In operation 402, the at least one processor 110 may identify whether the power state of the electronic device 101 satisfies a reference condition.

For example, the at least one processor 110 may identify the power state satisfying the reference condition based on detecting the power-off sequence.

For another example, the at least one processor 110 may identify the power state of the electronic device 101 satisfying the reference condition based on the SoC of the battery 140 less than a threshold value. The threshold value may be variously set according to an embodiment. However, it is not limited thereto. For example, the at least one processor 110 may identify the power state of the electronic device 101 satisfying the reference condition based on the voltage identified from the external power source less than a threshold voltage. The threshold voltage may be variously set according to an embodiment.

In operation 403, the at least one processor 110 may control, based on the power state not satisfying the reference condition, the storage device 210 to store data in a non-volatile memory 212 of the storage device 210 through a cache memory 211. The data may be provided from the at least one processor 110. The data may be stored in the non-volatile memory 212 of the storage device 210 through the cache memory 211, while the power state of the electronic device 101 does not satisfy the reference condition.

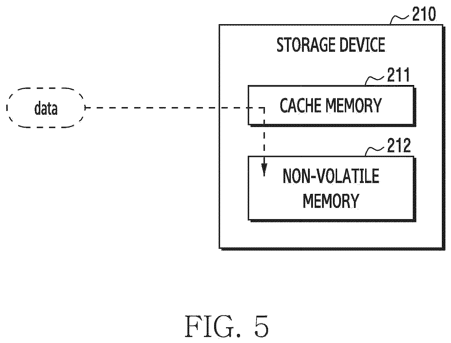

The operation 403 of storing the data in the non-volatile memory 212 of the storage device 210 through the cache memory 211 will be described with reference to FIG. 5.

FIG. 5 is an example for describing an operation of storing data to a storage device through a cache memory.

Referring to FIG. 5, a storage device 210 storing data in a non-volatile memory 212 through a cache memory 211 is illustrated.

The data may be provided from at least one processor 110. The data may be stored in the non-volatile memory 212 of the storage device 210 through the cache memory 211, while a power state of an electronic device 101 does not satisfy a reference condition.

For example, while the power state of the electronic device 101 does not satisfy the reference condition, the electronic device 101 may increase the data input/output speed of the storage device 210 by storing the data in the non-volatile memory 212 of the storage device 210 through the cache memory 211. For example, the electronic device 101 may increase the data input/output speed of the storage device 210 by temporarily storing pieces of data to be stored to the storage device 210 in the cache memory 211 and then concurrently storing the pieces of data stored in the cache memory 211 in the non-volatile memory 212. For example, the electronic device 101 may increase the data input/output speed of the storage device 210 by storing the data in the cache memory 211 and then transmitting a response indicating that the storage of the data has been completed to the at least one processor 110 before storing the data to the storage device 210.

Referring again to FIG. 4, in operation 404, the at least one processor 110 may transmit, based on the power state satisfying the reference condition, a command for disabling (or deactivating) the cache memory 211 to the storage device 210. For example, the command for disabling the cache memory 211 may be for not using the cache memory 211. For example, the command for disabling the cache memory 211 may be for controlling the storage device 210 to store the data provided from the at least one processor 110 in the non-volatile memory 212 of the storage device 210 by bypassing the cache memory 211.

In operation 405, the storage device 210 may store the data provided by the at least one processor 110 in the non-volatile memory 212 by bypassing the cache memory 211 based on receiving the command for disabling the cache memory 211.

For example, the storage device 210 may store, based on a power-off sequence being detected by the at least one processor 110, the data provided by the at least one processor 110 in the non-volatile memory 212 by bypassing the cache memory 211 according to the command for disabling the cache memory 211. For example, the data transmitted to the storage device 210 after the cache memory 211 is disabled may be described as all pieces of data not stored in the non-volatile memory 212 when the cache memory 211 is disabled. For example, the data may include not only data stored in files identified according to a file system 301 but also metadata stored in the files in association with the data. For example, at least a portion of the metadata stored in the files may be described as metadata associated with booting of the electronic device 101 and/or metadata associated with an operation of the file system 301. For example, the at least one processor 110 may identify the at least a portion of the metadata and data associated with the metadata when the cache memory 211 is disabled. For example, the metadata and the data associated with the metadata may be in a state of being cached in the cache memory associated with the at least one processor 110 by the at least one processor 110 when the cache memory 211 is disabled. The at least one processor 110 may transmit, based on the power-off sequence being detected, the command for disabling the cache memory 211 to the storage device 210, and then transmit the at least a portion of the cached metadata to the storage device 210. For example, the at least one processor 110 may perform, based on the power-off sequence being detected, an unmount operation of separating the file system 301 mounted on the storage device 210 from the storage device 210 by transmitting the data provided by the at least one processor 110 including the at least a portion of the cached metadata to the storage device 210.

For another example, the storage device 210 may store, based on identifying an SoC of a battery 140 less than a threshold value by the at least one processor 110, the data provided by the at least one processor 110 in the non-volatile memory 212 by bypassing the cache memory 211 according to the command for disabling the cache memory 211. For example, the data transmitted to the storage device 210 after the cache memory 211 is disabled may be described as the all pieces of data not stored in the non-volatile memory 212 when the cache memory 211 is disabled. For example, the at least one processor 110 may transmit the command for disabling the cache memory 211 to the storage device 210, and then transmit a command for enabling (or activating) the cache memory 211 to the storage device 210. For example, the command for enabling the cache memory 211 may be for controlling the storage device 210 to store, in the non-volatile memory 212, the data provided from the at least one processor 110 through the cache memory 211 by using the cache memory 211. For example, the storage device 210 may store the data provided from the at least one processor 110 in the non-volatile memory 212 by bypassing the cache memory 211 during a period from a time point when the command for disabling the cache memory 211 is received to a time point when the command for enabling the cache memory 211 is received.

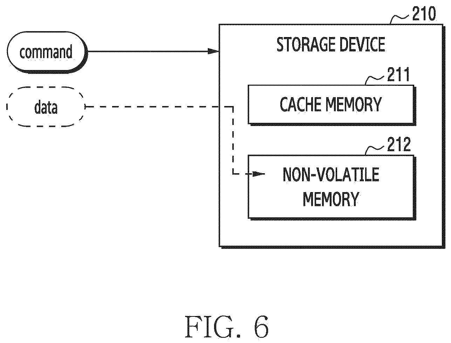

The operation 404 of transmitting a command for disabling the cache memory 211 and the operation 405 of storing the data in the non-volatile memory 212 of the storage device 210 by bypassing the cache memory 211 will be described with reference to FIG. 6.

FIG. 6 is an example for describing an operation of bypassing a cache memory based on a command for disabling the cache memory.

Referring to FIG. 6, a storage device 210 storing data in a non-volatile memory 212 by bypassing a cache memory 211 is illustrated based on a command for disabling the cache memory 211.

The command is the command for disabling the cache memory 211. The command may be provided from at least one processor 110. When a power state of an electronic device 101 satisfies a reference condition, the command may be transmitted from the at least one processor 110 to the storage device 210. The storage device 210 may disable the cache memory 211 based on receiving the command. The storage device 210 may store, based on disabling the cache memory 211, the data in the non-volatile memory 212 of the storage device 210 by bypassing the cache memory 211.

For example, while the power state of the electronic device 101 satisfies the reference condition, the electronic device 101 may increase reliability of the data stored to the storage device 210 by bypassing the cache memory 211 and storing the data in the non-volatile memory 212 of the storage device 210.

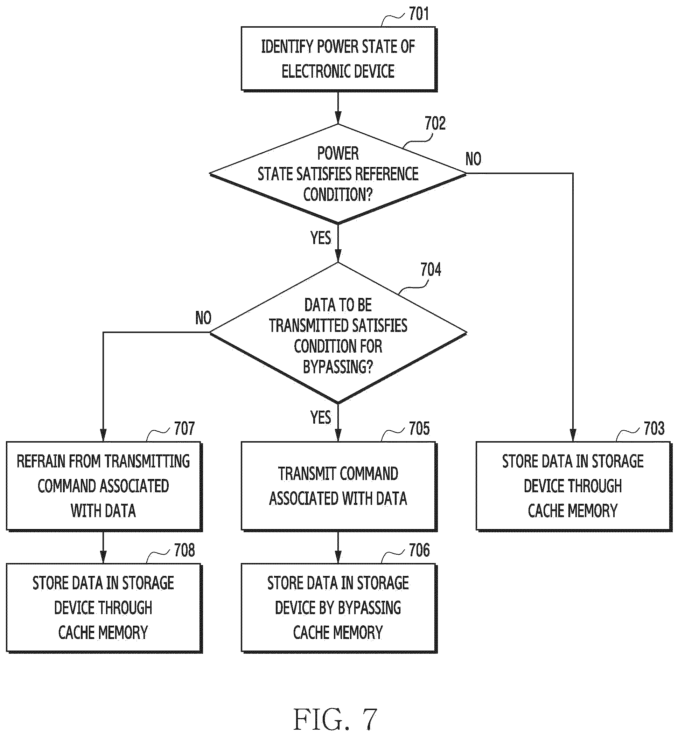

FIG. 7 is a flowchart illustrating another example of an operation method of storing data to a storage device based on a power state of an electronic device.

Referring to FIG. 7, in operation 701, at least one processor 110 may identify a power state of an electronic device 101. The power state may be described as a state related to a process in which power of a battery 140 is supplied to electronic components of the electronic device 101 through a PMIC 130. For example, the power state of the electronic device 101 may include a state related to a power-off of the electronic device 101 and a state related to the power of the battery 140 of the electronic device 101.

For example, the power state may include a state related to a power-off sequence executed by the at least one processor 110. The power-off sequence may be performed for ceasing or terminating to provide the power of the battery 140 to the electronic components of the electronic device 101 through the PMIC 130. As a non-limiting example, the at least one processor 110 may terminate an application being executed using an operating system (OS) while the power-off sequence is being performed, and may cut off the power provided to the electronic components of the electronic device 101 using the PMIC 130. For example, the operating system may be described as software stored in memory 120.

For example, the at least one processor 110 may identify the power state of the electronic device 101 by detecting (or by identifying) (or by perceiving) the power-off sequence of the electronic device 101 started or to be started. An operation method of detecting the power-off sequence may be described in various ways according to an embodiment. For example, the at least one processor 110 may identify an update of at least one software application of the electronic device 101 performed or to be performed. The at least one processor 110 may detect the power-off sequence of the electronic device 101 to be started based on the update of the at least one software application. For another example, the at least one processor 110 may identify a user input for turning off the electronic device 101. The at least one processor 110 may detect the power-off sequence of the electronic device 101 started or to be started based on the user input.

For another example, the power state may include a state of charge (SoC) of the battery 140. For example, the SoC may indicate a percentage according to the state of charge of the battery 140. As a non-limiting example, the at least one processor 110 may identify the SoC of the battery 140 based on information on a voltage, a current, a resistance, and/or a temperature of the battery 140 detected by the PMIC 130. An operation method of identifying the SoC may be described in various ways according to an embodiment. For example, the at least one processor 110 may identify the SoC of the battery 140 by using a voltage measurement method using the voltage of the battery 140, a current integration method using the current of the battery 140, an impedance measurement method using a resistance change of the battery 140, and/or an extended Kalman filter method using the voltage, the current, and the temperature of the battery 140. For example, the at least one processor 110 may identify the power state of the electronic device 101 by identifying the SoC of the battery 140 that supplies power to a storage device 210. However, it is not limited thereto. For example, the at least one processor 110 may identify the power state of the electronic device 101 by identifying a voltage from an external power source of the electronic device 101.

As described above, the at least one processor 110 may identify the power state of the electronic device 101 by performing an operation of detecting the power-off sequence of the electronic device 101, an operation of identifying the SoC of the battery 140, and/or an operation of identifying the voltage from the external power source.

In operation 702, the at least one processor 110 may identify whether the power state of the electronic device 101 satisfies a reference condition.

For example, the at least one processor 110 may identify the power state satisfying the reference condition based on detecting the power-off sequence.

For another example, the at least one processor 110 may identify, based on the SoC of the battery 140 being less than a threshold value, the power state of the electronic device 101 satisfying the reference condition. The threshold value may be variously set according to an embodiment. However, it is not limited thereto. For example, the at least one processor 110 may identify, based on the voltage identified from the external power source less than a threshold voltage, the power state of the electronic device satisfying the reference condition. The threshold voltage may be variously set according to an embodiment.

In operation 703, the at least one processor 110 may control, based on the power state not satisfying the reference condition, the storage device 210 to store data in a non-volatile memory 212 of the storage device 210 through a cache memory 211. The data may be provided from the at least one processor 110. While the power state of the electronic device 101 does not satisfy the reference condition, the data may be stored in the non-volatile memory 212 of the storage device 210 through the cache memory 211.

In operation 704, the at least one processor 110 may identify, based on the power state satisfying the reference condition, whether data to be transmitted to the storage device 210 satisfies a condition for bypassing the cache memory 211. For example, the data satisfying the condition for bypassing may be associated with booting the electronic device 101. For example, the data satisfying the condition for bypassing may include at least a portion of metadata stored in files identified according to a file system 301. The metadata may be in a state of being cached in a cache memory associated with the at least one processor 110 by the at least one processor 110.

For example, the data satisfying the condition for the bypassing may include metadata associated with the booting of the electronic device 101. For example, the metadata may include information on the file system 301 and/or an attribute of the file. For example, the metadata may include information on a file system superblock, a check point, a block, and/or a file allocation. The information on the file system superblock may include information on a type, a size, and/or the number of available blocks of the file system 301. The information on the check point may include information on a time point when a change to the file occurs, which is identified based on the file system 301. The information on the block may include information on the size of the block and/or an address of the block, which is a unit for physically storing data with respect to the file system 301. The information on the file allocation may include information on a type in which the file is allocated to the block.

According to an embodiment, the at least one processor 110 may increase reliability of the data stored to the storage device 210 by setting information on an inode of the file and/or an inode of a directory associated with the file as metadata satisfying the condition for bypassing. The information on the inode of the file may include information on a type of the file, a size of the file, and/or a storage location of data included in the file, and the like. The directory may be described as a file for managing the file or another directory. The information on the inode of the directory may include information on a type of the directory, a size of the directory, and/or a storage location of data included in the directory, and the like. For example, the file system 301 may be described as software stored in the memory 120 (e.g., the storage device 210) executed by the at least one processor 110.

For example, data not satisfying the condition for bypassing may be not associated with the booting of the electronic device 101 and may be described as data other than metadata. However, it is not necessarily limited thereto. For example, the data not satisfying the condition for bypassing may include at least a portion of metadata. For example, the at least one processor 110 may set the metadata satisfying the condition for bypassing in various ways. For example, the at least one processor 110 may set the metadata using a file (e.g., an sysfs node) for a dynamic setting change of the operating system (e.g., linux).

For example, the at least one processor 110 may apply a default setting at compile time or loading time of a module related to the file system 301 and set an indication (e.g., a setting value) in a defined type of file. For example, the at least one processor 110 may identify, based on the indication associated with the metadata, whether metadata satisfies the condition for bypassing. For example, the indication associated with the metadata may have a value indicating a type of metadata to bypass the cache memory 211.

For example, while the power state satisfies the reference condition, the at least one processor 110 may identify a first portion of the metadata as the data to be transmitted based on the indication associated with the metadata. While the power state satisfies the reference condition, the at least one processor 110 may transmit the first portion of the metadata and a command (e.g., a command to bypass the cache memory to be described later) associated with the first portion of the metadata to the storage device 210. The first portion of the metadata may be stored in the non-volatile memory 212 of the storage device 210 by bypassing the cache memory 211. For example, while the power state satisfies the reference condition, the at least one processor 110 may transmit a second portion of the metadata to the storage device 210 by refraining from transmitting the command associated with the second portion of the metadata. The second portion of the metadata may be stored in the non-volatile memory 212 of the storage device 210 through the cache memory 211.

For example, the value of the indication may be stored in two or more files (a file (/sys/fs/f2fs/fua_write/global) and a file (/sys/fs/f2fs/fua_write/node)). For example, when the value stored in the file (/sys/fs/f2fs/fua_write/global) corresponds to '1', the command may be applied to the file system superblock, the check point, the block, and the file allocation. For example, a value of the default setting for the two or more files may correspond to '0' indicating that the command is not applied. For example, when the value stored in the file (/sys/fs/f2fs/fua_write/node) corresponds to '1', the command may be applied to the inode of the file and the inode of the directory associated with the file. For example, when the value stored in the file (/sys/fs/f2fs/fua_write/node) corresponds to '2', the command may be applied to the inode of the directory associated with the file. For example, a value of the default setting for the files may correspond to '0' indicating that the command is not applied.

For another example, the value of the indication may be also set through a format (e.g., 0:2, 1:0, 1:1, or 1:2) defined in one file (/sys/fs/f2fs/fua_write/options).

In operation 705, the at least one processor 110 may transmit, based on the data to be transmitted satisfying the condition for bypassing, the data and the command associated with the data to the storage device 210. The command may be used to store the data in the non-volatile memory 212 of the storage device 210 by bypassing the cache memory 211. The at least one processor 110 may transmit the data satisfying the condition for bypassing to the storage device 210 as associated with transmitting the command to the storage device 210. For example, the at least one processor 110 may cause the storage device 210 to, based on the command, store the data satisfying the condition in the non-volatile memory 212 by transmitting the command to the storage device 210 to bypass the cache memory 211. For example, the command may be described as a force unit access (FUA) command (e.g., a force unit access write) to bypass the cache memory 211 included in the storage device 210.

For example, the data satisfying the condition for bypassing may be associated with the booting of the electronic device 101. for example, the at least one processor 110 may set data including at least a portion of data related to a booting process of the electronic device 101 and/or at least a portion of data related to an application for the booting of the electronic device 101 as data associated with the booting of the electronic device 101. An operation method of setting the data associated with the booting by the at least one processor 110 may be described in various ways according to an embodiment. As a non-limiting example, the at least one processor 110 may apply an identification number defined in the data associated with the booting to set the data associated with the booting. For example, the at least one processor 110 may designate a service and the application that affect the booting of the electronic device 101 as a defined process group (e.g., a boot_group) and apply the identification number to the defined process group. For example, data in a file stored in the process group to which the identification number is applied may bypass the cache memory 211 based on the command. For example, the defined process group may be changed while the electronic device 101 performs an operation based on the file (e.g., the sysfs node) for the dynamic setting change of the operating system (e.g., linux).

As described above, the at least one processor 110 may transmit the command to the storage device 210 for all pieces of data in the file stored in the defined process group. According to an embodiment, the at least one processor 110 may also transmit the command to the storage device 210 only for data in a file having a reference type (e.g., a reference extension) from among the file stored in the defined process group.

For example, the at least one processor 110 may identify files associated with the booting of the electronic device 101 according to the file system 301. Data stored in the files identified according to the file system 301 may be in a state of being cached in the cache memory associated with the at least one processor 110 by the at least one processor 110. While the power state satisfies the reference condition, the at least one processor 110 may identify, from among the files, data stored in at least one file of the reference type as the data associated with the booting. For example, the reference type may be described as a reference file extension such as a file extension (.xml), a file extension (.db), and a file extension (.key). For example, the reference type may be changed, based on the file (e.g., the sysfs node) for the dynamic setting change of the operating system (e.g., the linux), while the electronic device 101 performs an operation. For example, the reference type may be set based on a format (e.g., xml:db:key:...) defined in a file (sys/fs/f2fs/fua_write/file_extensions). For example, data included in a file (abc.xml), a file (ddd.xml), and a file (data.db) may bypass the cache memory 211 based on the command. For another example, the at least one processor 110 may process the command using a system call (e.g., an ioctl system call) in a file when storing the file with the file extension (.xml) and the file extension (.db) in the application. The at least one processor 110 may transmit the data stored in the at least one file and the command associated with the data to the storage device 210.

For example, the data associated with the command may include at least a portion of metadata stored in the files identified according to the file system 301. The metadata may be in a state of being cached in the cache memory associated with the at least one processor 110 by the at least one processor 110.

In operation 706, the storage device 210 may store data provided by the at least one processor 110 in the non-volatile memory 212 by bypassing the cache memory 211 based on receiving the command, associated with the data satisfying the condition for bypassing the cache memory 211.

In operation 707, based on the data to be transmitted not satisfying the condition for bypassing, the at least one processor 110 may refrain from transmitting the command associated with the data to be transmitted to the storage device 210, while the power state satisfies the reference condition.

In operation 708, the at least one processor 110 may control the storage device 210 to store data not satisfying the condition for bypassing in the non-volatile memory 212 of the storage device 210 through the cache memory 211. The data may be provided from the at least one processor 110. The data may be stored in the non-volatile memory 212 of the storage device 210 through the cache memory 211.

FIG. 7 illustrates that the operation 705 and the operation 706 are performed or the operation 707 and the operation 708 are performed according to whether the data to be transmitted satisfies the condition for bypassing in the operation 704, but it is merely an example. The operation 704, the operation 707, and the operation 708 may be also omitted or skipped. For example, the at least one processor 110 may perform the operation 705 and the operation 706 based on the power state of the electronic device 101 satisfying the reference condition.

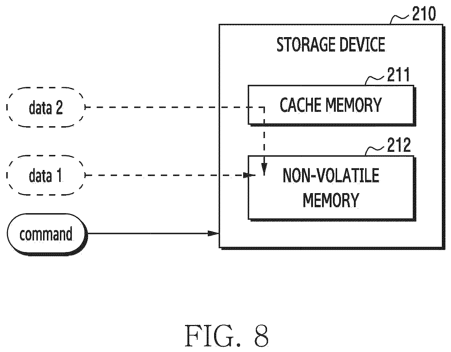

Based on the command associated with the data, the operation 704, the operation 705, the operation 706, the operation 707, and the operation 708 of storing the data to the storage device 210 will be described with reference to FIG. 8.

FIG. 8 is an example for describing an operation of storing data to a storage device based on a command associated with the data.

Referring to FIG. 8, a storage device 210 for storing first data (data 1) and second data (data 2) is illustrated. A command associated with the first data (data 1) may be described as a command used to store the first data (data 1) in a non-volatile memory 212 of the storage device 210 by bypassing a cache memory 211. The command may be provided from at least one processor 110. When the first data (data 1) satisfies a condition for bypass, the command may be transmitted from the at least one processor 110 to the storage device 210. The first data (data 1), which is data associated with a command, may be data satisfying the condition for bypass. The second data (data 2), which is data not associated with the command, may be data not satisfying the condition for bypass.

The at least one processor 110 may transmit the command associated with the first data (data 1) to the storage device 210. While a power state of an electronic device 101 satisfies a reference condition, the storage device 210 may store the first data (data 1) in the non-volatile memory 212 by bypassing the cache memory 211 based on receiving the command associated with the first data (data 1). For example, the electronic device 101 may increase reliability of the data stored to the storage device 210 by bypassing the cache memory 211 and storing the first data (data 1) in the non-volatile memory 212 of the storage device 210.

For example, as the electronic device 101 directly stores data associated with booting in the non-volatile memory 212 by bypassing the cache memory 211, the electronic device 101 may be stably rebooted even though a power state applied to the electronic device 101 is unstable.

For example, as the electronic device 101 directly stores data including at least a portion of metadata in the non-volatile memory 212 by bypassing the cache memory 211, the metadata related to a file system 301 may be stably stored even though the power state applied to the electronic device 101 is unstable.

The at least one processor 110 may refrain from transmitting a command associated with the second data (data 2) to the storage device 210. While the power state of the electronic device 101 satisfies the reference condition, the storage device 210 may store the second data (data 2) in the non-volatile memory 212 through the cache memory 211. For example, the electronic device 101 may increase the data input/output speed of the storage device 210 by storing the second data (data 2) in the non-volatile memory 212 of the storage device 210 through the cache memory 211.

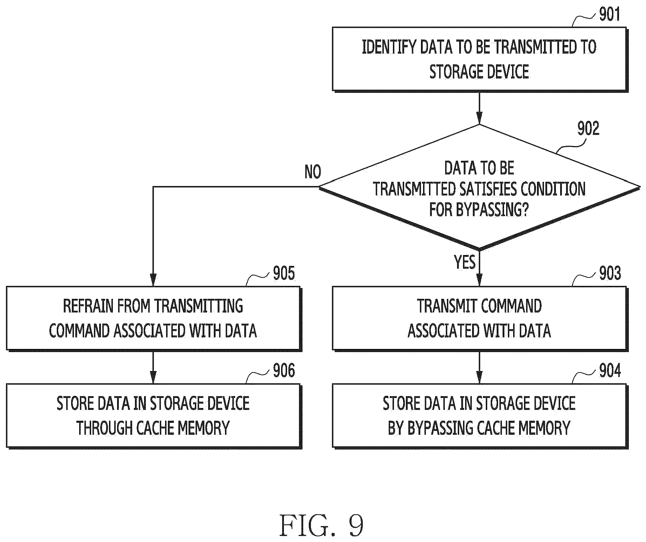

In an embodiment, an operation in which the first data (data 1) is stored in the non-volatile memory 212 by bypassing the cache memory 211 and an operation in which the second data (data 2) is stored in the non-volatile memory 212 through the cache memory 211, illustrated in FIG. 8, may be performed regardless of the power state of the electronic device 101. For example, regardless of the power state of the electronic device 101, in a state that the cache memory 211 is activated (or enabled), the electronic device 101 may selectively perform an operation for bypassing the cache memory 211 according to whether data to be transmitted to the storage device 210 satisfies the condition for bypassing. An operation method of selectively bypassing the cache memory 211 regardless of the power state will be described with reference to FIG. 9.

FIG. 9 is a flowchart illustrating an example of an operation method of selectively bypassing a cache memory based on a command associated with data.

Referring to FIG. 9, in operation 901, at least one processor 110 may identify data to be transmitted to a storage device 210.

In operation 902, at least one processor 110 may identify whether the data to be transmitted to the storage device 210 satisfies a condition for bypassing a cache memory 211. For example, data satisfying the condition for bypassing may be associated with booting an electronic device 101. For example, the data satisfying the condition for bypassing may include at least a portion of metadata stored in files identified according to a file system 301. The metadata may be in a state of being cached in the cache memory associated with the at least one processor 110 by the at least one processor 110.

For example, the data satisfying the condition for the bypassing may include metadata associated with the booting of the electronic device 101. For example, the metadata may include information on the file system 301 and/or an attribute of the file. For example, the metadata may include information on a file system superblock, a check point, a block, and/or a file allocation. The information on the file system superblock may include information on a type, a size, and/or the number of available blocks of the file system 301. The information on the check point may include information on a time point when a change to the file occurs, which is identified based on the file system 301. The information on the block may include information on the size of the block and/or an address of the block, which is a unit for physically storing data with respect to the file system 301. The information on the file allocation may include information on a type in which the file is allocated to the block.

According to an embodiment, the at least one processor 110 may increase reliability of the data stored to the storage device 210 by setting information on an inode of the file and/or an inode of a directory associated with the file as metadata satisfying the condition for bypassing. The information on the inode of the file may include information on a type of the file, a size of the file, and/or a storage location of data included in the file, and the like. The directory may be described as a file for managing the file or another directory. The information on the inode of the directory may include information on a type of the directory, a size of the directory, and/or a storage location of data included in the directory, and the like. For example, the file system 301 may be described as software stored in memory 120 (e.g., the storage device 210) executed by the at least one processor 110.

For example, data not satisfying the condition for bypassing may be not associated with the booting of the electronic device 101 and may be described as data other than metadata. However, it is not necessarily limited thereto. For example, the data not satisfying the condition for bypassing may include at least a portion of metadata. For example, the at least one processor 110 may set the metadata satisfying the condition for bypassing in various ways. For example, the at least one processor 110 may set the metadata using a file (e.g., a sysfs node) for a dynamic setting change of an operating system (e.g., linux).

For example, the at least one processor 110 may apply a default setting at compile time or loading time of a module related to the file system 301 and set an indication (e.g., a setting value) in a defined type of file. For example, the at least one processor 110 may identify, based on the indication associated with the metadata, whether metadata satisfies the condition for bypassing. For example, the indication associated with the metadata may have a value indicating a type of metadata to bypass the cache memory 211.

For example, the at least one processor 110 may identify, based on the indication associated with the metadata, a first portion of the metadata as the data to be transmitted. The at least one processor 110 may transmit the first portion of the metadata and a command (e.g., a command (a command to bypass the cache memory) to be described later) associated with the first portion of the metadata to the storage device 210. The first portion of the metadata may be stored in a non-volatile memory 212 of the storage device 210 by bypassing the cache memory 211. For example, the at least one processor 110 may transmit a second portion of the metadata to the storage device 210 by refraining from transmitting the command associated with the second portion of the metadata. The second portion of the metadata may be stored in the non-volatile memory 212 of the storage device 210 through the cache memory 211.

For example, a value of the indication may be stored in two or more files (a file (/sys/fs/f2fs/fua_write/global) and a file (/sys/fs/f2fs/fua_write/node)). For example, when the value stored in the file (/sys/fs/f2fs/fua_write/global) corresponds to '1', the command may be applied to the file system superblock, the check point, the block, and the file allocation. For example, a value of the default setting for the two or more files may correspond to '0' indicating that the command is not applied. For example, when the value stored in the file (/sys/fs/f2fs/fua_write/node) corresponds to '1', the command may be applied to the inode of the file and the inode of the directory associated with the file. For example, when the value stored in the file (/sys/fs/f2fs/fua_write/node) corresponds to '2', the command may be applied to the inode of the directory associated with the file. For example, the value of the default setting for the files may correspond to '0' indicating that the command is not applied.

For another example, the value of the indication may be also set through a format (e.g., 0:2, 1:0, 1:1, or 1:2) defined in one file (/sys/fs/f2fs/fua_write/options).

In operation 903, the at least one processor 110 may transmit, based on the data to be transmitted satisfying the condition for bypassing, the data and the command associated with the data to the storage device 210. The command may be used to store the data in the non-volatile memory 212 of the storage device 210 by bypassing the cache memory 211. The at least one processor 110 may transmit the data satisfying the condition for bypassing to the storage device 210 as associated with transmitting the command to the storage device 210. For example, the at least one processor 110 may cause the storage device 210 to, based on the command, store the data satisfying the condition in the non-volatile memory 212 by bypassing the cache memory 211, by transmitting the command to the storage device 210. For example, the command may be described as a force unit access (FUA) command (e.g., a force unit access write) to bypass the cache memory 211 included in the storage device 210.

For example, the data satisfying the condition for bypassing may be associated with the booting of the electronic device 101, for example, the at least one processor 110 may set data including at least a portion of data related to a booting process of the electronic device 101 and/or at least a portion of data related to an application for the booting of the electronic device 101 as data associated with the booting of the electronic device 101. An operation method of setting the data associated with the booting by the at least one processor 110 may be described in various ways according to an embodiment. As a non-limiting example, the at least one processor 110 may apply an identification number defined in the data associated with the booting to set the data associated with the booting. For example, the at least one processor 110 may designate a service and the application that affect the booting of the electronic device 101 as a defined process group (e.g., a boot_group) and apply the identification number to the defined process group. For example, data in a file stored in the process group to which the identification number is applied may bypass the cache memory 211 based on the command. For example, the defined process group may be changed while the electronic device 101 performs an operation based on the file (e.g., the sysfs node) for the dynamic setting change of the operating system (e.g., the linux).

As described above, the at least one processor 110 may transmit the command to the storage device 210 for all pieces of data in the file stored in the defined process group. According to an embodiment, the at least one processor 110 may also transmit the command to the storage device 210 only for data in a file having a reference type (e.g., a reference extension) from among the file stored in the defined process group.

For example, the at least one processor 110 may identify files associated with the booting of the electronic device 101 according to the file system 301. Data stored in the files identified according to the file system 301 may be in a state of being cached in the cache memory associated with the at least one processor 110 by the at least one processor 110. The at least one processor 110 may identify, from among the files, data stored in at least one file of the reference type as the data associated with the booting. For example, the reference type may be described as a reference file extension such as a file extension (.xml), a file extension (.db), and a file extension (.key). For example, the reference type may be changed, based on the file (e.g., the sysfs node) for the dynamic setting change of the operating system (e.g., linux), while the electronic device 101 performs an operation. For example, the reference type may be set based on a format (e.g., xml:db:key:...) defined in a file (sys/fs/f2fs/fua_write/file_extensions). For example, data included in a file (abc.xml), a file (ddd.xml), and a file (data.db) may bypass the cache memory 211 based on the command. For another example, the at least one processor 110 may process the command using a system call (e.g., an ioctl system call) in a file when storing the file with the file extension (.xml) and the file extension (.db) in the application. The at least one processor 110 may transmit the data stored in the at least one file and the command associated with the data to the storage device 210.

For example, the data associated with the command may include at least a portion of metadata stored in the files identified according to the file system 301. The metadata may be in a state of being cached in the cache memory associated with the at least one processor 110 by the at least one processor 110.

In operation 904, the storage device 210 may store data provided by the at least one processor 110 in the non-volatile memory 212 by bypassing the cache memory 211 based on receiving the command, associated with the data satisfying the condition for bypassing the cache memory 211.

In operation 905, based on the data to be transmitted not satisfying the condition for bypassing, the at least one processor 110 may refrain from transmitting the command associated with the data to be transmitted to the storage device 210.

In operation 906, the at least one processor 110 may control the storage device 210 to store data not satisfying the condition for bypassing in the non-volatile memory 212 of the storage device 210 through the cache memory 211. The data may be provided from the at least one processor 110. The data may be stored in the non-volatile memory 212 of the storage device 210 through the cache memory 211.

The electronic device 101 may correspond to an electronic device 1001 described with reference to FIG. 10 below.

FIG. 10 is a block diagram illustrating an electronic device 1001 in a network environment 1000 according to various embodiments.

Referring to FIG. 10, the electronic device 1001 in the network environment 1000 may communicate with an electronic device 1002 via a first network 1098 (e.g., a short-range wireless communication network), or at least one of an electronic device 1004 or a server 1008 via a second network 1099 (e.g., a long-range wireless communication network). According to an embodiment, the electronic device 1001 may communicate with the electronic device 1004 via the server 1008. According to an embodiment, the electronic device 1001 may include a processor 1020, memory 1030, an input module 1050, a sound output module 1055, a display module 1060, an audio module 1070, a sensor module 1076, an interface 1077, a connecting terminal 1078, a haptic module 1079, a camera module 1080, a power management module 1088, a battery 1089, a communication module 1090, a subscriber identification module(SIM) 1096, or an antenna module 1097. In some embodiments, at least one of the components (e.g., the connecting terminal 1078) may be omitted from the electronic device 1001, or one or more other components may be added in the electronic device 1001. In some embodiments, some of the components (e.g., the sensor module 1076, the camera module 1080, or the antenna module 1097) may be implemented as a single component (e.g., the display module 1060).

The processor 1020 may execute, for example, software (e.g., a program 1040) to control at least one other component (e.g., a hardware or software component) of the electronic device 1001 coupled with the processor 1020, and may perform various data processing or computation. According to an embodiment, as at least part of the data processing or computation, the processor 1020 may store a command or data received from another component (e.g., the sensor module 1076 or the communication module 1090) in volatile memory 1032, process the command or the data stored in the volatile memory 1032, and store resulting data in non-volatile memory 1034. According to an embodiment, the processor 1020 may include a main processor 1021 (e.g., a central processing unit (CPU) or an application processor (AP)), or an auxiliary processor 1023 (e.g., a graphics processing unit (GPU), a neural processing unit (NPU), an image signal processor (ISP), a sensor hub processor, or a communication processor (CP)) that is operable independently from, or in conjunction with, the main processor 1021. For example, when the electronic device 1001 includes the main processor 1021 and the auxiliary processor 1023, the auxiliary processor 1023 may be adapted to consume less power than the main processor 1021, or to be specific to a specified function. The auxiliary processor 1023 may be implemented as separate from, or as part of the main processor 1021.

The auxiliary processor 1023 may control at least some of functions or states related to at least one component (e.g., the display module 1060, the sensor module 1076, or the communication module 1090) among the components of the electronic device 1001, instead of the main processor 1021 while the main processor 1021 is in an inactive (e.g., sleep) state, or together with the main processor 1021 while the main processor 1021 is in an active state (e.g., executing an application). According to an embodiment, the auxiliary processor 1023 (e.g., an image signal processor or a communication processor) may be implemented as part of another component (e.g., the camera module 1080 or the communication module 1090) functionally related to the auxiliary processor 1023. According to an embodiment, the auxiliary processor 1023 (e.g., the neural processing unit) may include a hardware structure specified for artificial intelligence model processing. An artificial intelligence model may be generated by machine learning. Such learning may be performed, e.g., by the electronic device 1001 where the artificial intelligence is performed or via a separate server (e.g., the server 1008). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1030 may store various data used by at least one component (e.g., the processor 1020 or the sensor module 1076) of the electronic device 1001. The various data may include, for example, software (e.g., the program 1040) and input data or output data for a command related thereto. The memory 1030 may include the volatile memory 1032 or the non-volatile memory 1034.

The program 1040 may be stored in the memory 1030 as software, and may include, for example, an operating system (OS) 1042, middleware 1044, or an application 1046.

The input module 1050 may receive a command or data to be used by another component (e.g., the processor 1020) of the electronic device 1001, from the outside (e.g., a user) of the electronic device 1001. The input module 1050 may include, for example, a microphone, a mouse, a keyboard, a key (e.g., a button), or a digital pen (e.g., a stylus pen).

The sound output module 1055 may output sound signals to the outside of the electronic device 1001. The sound output module 1055 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1060 may visually provide information to the outside (e.g., a user) of the electronic device 1001. The display module 1060 may include, for example, a display, a hologram device, or a projector and control circuitry to control a corresponding one of the display, hologram device, and projector. According to an embodiment, the display module 1060 may include a touch sensor adapted to detect a touch, or a pressure sensor adapted to measure the intensity of force incurred by the touch.

The audio module 1070 may convert a sound into an electrical signal and vice versa. According to an embodiment, the audio module 1070 may obtain the sound via the input module 1050, or output the sound via the sound output module 1055 or a headphone of an external electronic device (e.g., an electronic device 1002) directly (e.g., wiredly) or wirelessly coupled with the electronic device 1001.

The sensor module 1076 may detect an operational state (e.g., power or temperature) of the electronic device 1001 or an environmental state (e.g., a state of a user) external to the electronic device 1001, and then generate an electrical signal or data value corresponding to the detected state. According to an embodiment, the sensor module 1076 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1077 may support one or more specified protocols to be used for the electronic device 1001 to be coupled with the external electronic device (e.g., the electronic device 1002) directly (e.g., wiredly) or wirelessly. According to an embodiment, the interface 1077 may include, for example, a high definition multimedia interface (HDMI), a universal serial bus (USB) interface, a secure digital (SD) card interface, or an audio interface.

A connecting terminal 1078 may include a connector via which the electronic device 1001 may be physically connected with the external electronic device (e.g., the electronic device 1002). According to an embodiment, the connecting terminal 1078 may include, for example, an HDMI connector, a USB connector, an SD card connector, or an audio connector (e.g., a headphone connector).

The haptic module 1079 may convert an electrical signal into a mechanical stimulus (e.g., a vibration or a movement) or electrical stimulus which may be recognized by a user via his tactile sensation or kinesthetic sensation. According to an embodiment, the haptic module 1079 may include, for example, a motor, a piezoelectric element, or an electric stimulator.

The camera module 1080 may capture a still image or moving images. According to an embodiment, the camera module 1080 may include one or more lenses, image sensors, image signal processors, or flashes.

The power management module 1088 may manage power supplied to the electronic device 1001. According to an embodiment, the power management module 1088 may be implemented as at least part of, for example, a power management integrated circuit (PMIC).

The battery 1089 may supply power to at least one component of the electronic device 1001. According to an embodiment, the battery 1089 may include, for example, a primary cell which is not rechargeable, a secondary cell which is rechargeable, or a fuel cell.

The communication module 1090 may support establishing a direct (e.g., wired) communication channel or a wireless communication channel between the electronic device 1001 and the external electronic device (e.g., the electronic device 1002, the electronic device 1004, or the server 1008) and performing communication via the established communication channel. The communication module 1090 may include one or more communication processors that are operable independently from the processor 1020 (e.g., the application processor (AP)) and supports a direct (e.g., wired) communication or a wireless communication. According to an embodiment, the communication module 1090 may include a wireless communication module 1092 (e.g., a cellular communication module, a short-range wireless communication module, or a global navigation satellite system (GNSS) communication module) or a wired communication module 1094 (e.g., a local area network (LAN) communication module or a power line communication (PLC) module). A corresponding one of these communication modules may communicate with the external electronic device via the first network 1098 (e.g., a short-range communication network, such as Bluetooth^{™}, wireless-fidelity (Wi-Fi) direct, or infrared data association (IrDA)) or the second network 1099 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1092 may identify and authenticate the electronic device 1001 in a communication network, such as the first network 1098 or the second network 1099, using subscriber information (e.g., international mobile subscriber identity (IMSI)) stored in the subscriber identification module 1096.

The wireless communication module 1092 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1092 may support a high-frequency band (e.g., the mmWave band) to achieve, e.g., a high data transmission rate. The wireless communication module 1092 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1092 may support various requirements specified in the electronic device 1001, an external electronic device (e.g., the electronic device 1004), or a network system (e.g., the second network 1099). According to an embodiment, the wireless communication module 1092 may support a peak data rate (e.g., 20Gbps or more) for implementing eMBB, loss coverage (e.g., 1064dB or less) for implementing mMTC, or U-plane latency (e.g., 0.5ms or less for each of downlink (DL) and uplink (UL), or a round trip of 10ms or less) for implementing URLLC.

The antenna module 1097 may transmit or receive a signal or power to or from the outside (e.g., the external electronic device) of the electronic device 1001. According to an embodiment, the antenna module 1097 may include an antenna including a radiating element composed of a conductive material or a conductive pattern formed in or on a substrate (e.g., a printed circuit board (PCB)). According to an embodiment, the antenna module 1097 may include a plurality of antennas (e.g., array antennas). In such a case, at least one antenna appropriate for a communication scheme used in the communication network, such as the first network 1098 or the second network 1099, may be selected, for example, by the communication module 1090 (e.g., the wireless communication module 1092) from the plurality of antennas. The signal or the power may then be transmitted or received between the communication module 1090 and the external electronic device via the selected at least one antenna. According to an embodiment, another component (e.g., a radio frequency integrated circuit (RFIC)) other than the radiating element may be additionally formed as part of the antenna module 1097.

According to various embodiments, the antenna module 1097 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1001 and the external electronic device 1004 via the server 1008 coupled with the second network 1099. Each of the electronic devices 1002 or 1004 may be a device of a same type as, or a different type, from the electronic device 1001. According to an embodiment, all or some of operations to be executed at the electronic device 1001 may be executed at one or more of the external electronic devices 1002, 1004, or 1008. For example, if the electronic device 1001 should perform a function or a service automatically, or in response to a request from a user or another device, the electronic device 1001, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1001. The electronic device 1001 may provide the outcome, with or without further processing of the outcome, as at least part of a reply to the request. To that end, a cloud computing, distributed computing, mobile edge computing (MEC), or client-server computing technology may be used, for example. The electronic device 1001 may provide ultra low-latency services using, e.g., distributed computing or mobile edge computing. In another embodiment, the external electronic device 1004 may include an internet-of-things (IoT) device. The server 1008 may be an intelligent server using machine learning and/or a neural network. According to an embodiment, the external electronic device 1004 or the server 1008 may be included in the second network 1099. The electronic device 1001 may be applied to intelligent services (e.g., smart home, smart city, smart car, or healthcare) based on 5G communication technology or IoT-related technology.

The technical solutions to be achieved in this document are not limited to those described above, and other technical solutions not mentioned herein will be clearly understood by those having ordinary knowledge in the art to which the present disclosure belongs, from the following description.

An electronic device (e.g., the electronic device 101) as described above may include at least one processor (e.g., the at least one processor 110) including processing circuitry, and memory (e.g., the memory 120), including one or more storage devices, storing instructions. The one or more storage devices may include a storage device (e.g., the storage device 210) including a cache memory (e.g., the cache memory 211). The instructions, when executed by the at least one processor individually or collectively, may cause the electronic device to identify a power state of the electronic device, and, based on the power state satisfying a reference condition, transmit, from the at least one processor to the storage device, a command to disable the cache memory.

For example, the command to disable the cache memory may be configured to controlling the storage device to store data provided from the at least one processor, by bypassing the cache memory. For example, the instructions, when executed by the at least one processor individually or collectively, may cause the electronic device to, based on the power state not satisfying the reference condition, control the storage device to store, through the cache memory, to the storage device, data provided from the at least one processor.

For example, the instructions, when executed by the at least one processor individually or collectively, may cause the electronic device to store the data provided from the at least one processor to the storage device through the cache memory, where the power state does not satisfy the reference condition.

For example, the instructions, when executed by the at least one processor individually or collectively, may cause the electronic device to detect a power-off sequence of the electronic device started or to be started. The power-off sequence of the electronic device may be performed for ceasing or terminating to provide power to electronic components of the electronic device. The instructions, when executed by the at least one processor individually or collectively, may cause the electronic device to, based on the detection, identify the power state as satisfying the reference condition.

For example, the instructions, when executed by the at least one processor individually or collectively, may cause the electronic device to identify metadata stored in files identified in accordance with a file system (e.g., the file system 301). The metadata may be cached by the at least one processor. The instructions, when executed by the at least one processor individually or collectively, may cause the electronic device to, based on the power state satisfying the reference condition, after transmitting the command from the at least one processor to the storage device, transmit at least a portion of the metadata as the data from the at least one processor to the storage device.

For example, the instructions, when executed by the at least one processor individually or collectively, may cause the electronic device to identify an update of at least one software application of the electronic device performed or to be performed, and based on the update of the at least one software application, detect the power-off sequence of the electronic device to be started.

For example, the instructions, when executed by the at least one processor individually or collectively, may cause the electronic device to identify a user input for turning off the electronic device, and based on the user input, detect the power-off sequence of the electronic device started or to be started.

For example, the electronic device may further include a rechargeable battery (e.g., the battery 140) supplying power to the storage device. The instructions, when executed by the at least one processor individually or collectively, may cause the electronic device to identify a state of charge (SoC) of the rechargeable battery, and based on the SoC being less than a threshold value, identify the power state of the electronic device as satisfying the reference condition.

For example, the instructions, when executed by the at least one processor individually or collectively, may cause the electronic device to identify a voltage from an external power source, and based on the voltage being less than a threshold voltage, identify the power state of the electronic device as satisfying the reference condition.

An electronic device (e.g., the electronic device 101) as described above may include at least one processor (e.g., the at least one processor 110) including processing circuitry, and memory (e.g., the memory 120), including one or more storage devices, storing instructions. The one or more storage devices may include a storage device (e.g., the storage device 210) including a cache memory (e.g., the cache memory 211). The instructions, when executed by the at least one processor individually or collectively, may cause the electronic device to identify a power state of the electronic device, and based on the power state satisfying a reference condition, transmit, from the at least one processor to the storage device, data and a command associated with the data. The command may be used for storing the data to the storage device by bypassing the cache memory.

For example, the data may be first data including at least a portion of metadata stored in files identified in accordance with a file system (e.g., the file system 301). The metadata may be cached by the at least one processor. The instructions, when executed by the at least one processor individually or collectively, may cause the electronic device to, while the power state satisfies the reference condition, transmit second data from the at least one processor to the storage device, and refrain from transmitting the command associated with the second data. The second data may be stored through the cache memory to the storage device.

For example, the instructions, when executed by the at least one processor individually or collectively, may cause the electronic device to identify metadata stored in files identified in accordance with a file system. The metadata may be cached by the at least one processor. The instructions, when executed by the at least one processor individually or collectively, may cause the electronic device to, while the power state satisfies the reference condition, based on an indication associated with the metadata, identify a first portion of the metadata as the data to be transmitted, transmit, from the at least one processor to the storage device, the first portion of the metadata and the command associated with the first portion of the metadata, and transmit, from the at least one processor to the storage device, a second portion of the metadata by refraining from transmitting the command associated with the second a portion of the metadata. The first portion of the metadata may be stored to the storage device by bypassing the cache memory. The second portion of the metadata may be stored through the cache memory to the storage device.

For example, the data may be associated with booting of the electronic device.

For example, the instructions, when executed by the at least one processor individually or collectively, may cause the electronic device to identify files identified in accordance with a file system. Data stored in the files may be cached by the at least one processor. The instructions, when executed by the at least one processor individually or collectively, may cause the electronic device to, while the power state satisfies the reference condition, identify, from among the files, at least one file of a reference type, and transmit the data stored in the at least one file and the command associated with the data.

For example, data provided from the at least one processor, may be stored through the cache memory to the storage device, while the power state does not satisfy the reference condition.

For example, the instructions, when executed by the at least one processor individually or collectively, may cause the electronic device to, based on the power state not satisfying the reference condition, control the storage device to store, through the cache memory, to the storage device, data provided from the at least one processor.

For example, the instructions, when executed by the at least one processor individually or collectively, may cause the electronic device to detect a power-off sequence of the electronic device started or to be started. The power-off sequence of the electronic device may be performed for ceasing or terminating to provide power to electronic components of the electronic device. The instructions, when executed by the at least one processor individually or collectively, may cause the electronic device to, based on the detection, identify the power state satisfying the reference condition.

For example, the electronic device may further include a rechargeable battery (e.g., the battery 140) supplying power to the storage device. The instructions, when executed by the at least one processor individually or collectively, may cause the electronic device to identify a state of charge (SoC) of the rechargeable battery, and based on the SoC less than a threshold value, identify the power state of the electronic device satisfying the reference condition.

For example, the instructions, when executed by the at least one processor individually or collectively, may cause the electronic device to identify a voltage from an external power source, and based on the voltage less than a threshold voltage, identify the power state of the electronic device satisfying the reference condition.

A non-transitory computer readable storage medium as described above may store one or more programs. The one or more programs may include instructions to, when executed by an electronic device (e.g., the electronic device 101) with at least one processor (e.g., the at least one processor 110) and a storage device (e.g., the storage device 210) including a cache memory (e.g., the cache memory 211), cause the electronic device to identify a power state of the electronic device. The one or more programs may include instructions to, when executed by the electronic device, based on the power state satisfying a reference condition, cause the electronic device to transmit, from the at least one processor to the storage device, a command to disable the cache memory. The command for disabling the cache memory may be for controlling the storage device to store, to the storage device, data provided from the at least one processor by bypassing the cache memory.

For example, the command to disable the cache memory is configured to control the storage device to store data provided from the at least one processor, by bypassing the cache memory.

For example, the one or more program programs comprise instructions to, when executed by the electronic device, cause the electronic device to: store the data provided from the at least one processor to the storage device through the cache memory, where the power state does not satisfy the reference condition.

For example, the one or more programs comprise instructions to, when executed by the electronic device, cause the electronic device to: detect a power-off sequence of the electronic device started or to be started, the power-off sequence of the electronic device performed for ceasing or terminating to provide a power to electronic components of the electronic device; and based on the detection, identify the power state as satisfying the reference condition.

For example, the one or more programs comprise instructions to, when executed by the electronic device, cause the electronic device to identify metadata stored in files identified in accordance with a file system, the metadata being cached by the at least one processor; and based on the power state satisfying the reference condition, after transmitting the command from the at least one processor to the storage device, transmit at least a portion of the metadata as the data from the at least one processor to the storage device.

For example, the one or more programs comprise instructions to, when executed by the electronic device, cause the electronic device to: identify a state of charge (SoC) of a rechargeable battery included in the electronic device; and based on the SoC being less than a threshold value, identify the power state of the electronic device as satisfying the reference condition.

A non-transitory computer readable storage medium as described above may store one or more programs. The one or more programs may include instructions to, when executed by an electronic device (e.g., the electronic device 101) with at least one processor (e.g., the at least one processor 110) and a storage device (e.g., the storage device 210) including a cache memory (e.g., the cache memory 211), cause the electronic device to identify a power state of the electronic device. The one or more programs may include instructions to, when executed by the electronic device, based on the power state satisfying a reference condition, cause the electronic device to transmit, from the at least one processor to the storage device, data and a command associated with the data. The command may be used for storing the data to the storage device by bypassing the cache memory.

The effects that may be obtained from the present disclosure are not limited to those effects mentioned above, and any other effects not mentioned herein may be clearly understood by those having ordinary knowledge in the art to which the present disclosure belongs.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1040) including one or more instructions that are stored in a storage medium (e.g., internal memory 1036 or external memory 1038) that is readable by a machine (e.g., the electronic device 1001). For example, a processor (e.g., the processor 1020) of the machine (e.g., the electronic device 1001) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
at least one processor comprising processing circuitry; and
memory, comprising one or more storage devices, storing instructions,
wherein the one or more storage devices comprise a storage device including a cache memory,
wherein the instructions, when executed by the at least one processor individually or collectively, cause the electronic device to:
identify a power state of the electronic device; and
based on the power state satisfying a reference condition, transmit, from the at least one processor to the storage device, a command to disable the cache memory.

2. The electronic device of claim 1, wherein the command to disable the cache memory is configured to control the storage device to store data provided from the at least one processor, by bypassing the cache memory.

3. The electronic device of claim 1, wherein the instructions, when executed by the at least one processor individually or collectively, cause the electronic device to:
store the data provided from the at least one processor to the storage device through the cache memory, where the power state does not satisfy the reference condition.

4. The electronic device of claim 1, wherein the instructions, when executed by the at least one processor individually or collectively, cause the electronic device to:
detect a power-off sequence of the electronic device started or to be started, the power-off sequence of the electronic device performed for ceasing or terminating to provide a power to electronic components of the electronic device; and
based on the detection, identify the power state as satisfying the reference condition.

5. The electronic device of claim 4, wherein the instructions, when executed by the at least one processor individually or collectively, cause the electronic device to:
identify metadata stored in files identified in accordance with a file system, the metadata being cached by the at least one processor; and
based on the power state satisfying the reference condition, after transmitting the command from the at least one processor to the storage device, transmit at least a portion of the metadata as the data from the at least one processor to the storage device.

6. The electronic device of claim 4, wherein the instructions, when executed by the at least one processor individually or collectively, cause the electronic device to:
identify an update of at least one software application of the electronic device performed or to be performed; and
based on the update of the at least one software application, detect the power-off sequence of the electronic device to be started.

7. The electronic device of claim 4, wherein the instructions, when executed by the at least one processor individually or collectively, cause the electronic device to:
identify a user input for turning off the electronic device; and
based on the user input, detect the power-off sequence of the electronic device started or to be started.

8. The electronic device of claim 1, further comprising:
a rechargeable battery supplying power to the storage device,
wherein the instructions, when executed by the at least one processor individually or collectively, cause the electronic device to:
identify a state of charge (SoC) of the rechargeable battery; and
based on the SoC being less than a threshold value, identify the power state of the electronic device as satisfying the reference condition.

9. The electronic device of claim 1, wherein the instructions, when executed by the at least one processor individually or collectively, cause the electronic device to:
identify a voltage from an external power source; and
based on the voltage being less than a threshold voltage, identify the power state of the electronic device as satisfying the reference condition.

10. A non-transitory computer readable storage medium storing one or more programs, the one or more programs comprising instructions to, when executed by an electronic device with at least one processor and a storage device including a cache memory, cause the electronic device to:
identify a power state of the electronic device; and
based on the power state satisfying a reference condition, transmit, from the at least one processor to the storage device, a command to disable the cache memory.

11. The non-transitory computer readable storage medium of claim 10, wherein the command to disable the cache memory is configured to control the storage device to store data provided from the at least one processor, by bypassing the cache memory.

12. The non-transitory computer readable storage medium of claim 10, wherein the one or more programs comprise instructions to, when executed by the electronic device, cause the electronic device to:
store the data provided from the at least one processor to the storage device through the cache memory, where the power state does not satisfy the reference condition.

13. The non-transitory computer readable storage medium of claim 10, wherein the one or more programs comprise instructions to, when executed by the electronic device, cause the electronic device to:
detect a power-off sequence of the electronic device started or to be started, the power-off sequence of the electronic device performed for ceasing or terminating to provide a power to electronic components of the electronic device; and
based on the detection, identify the power state as satisfying the reference condition.

14. The non-transitory computer readable storage medium of claim 13, wherein the one or more programs comprise instructions to, when executed by the electronic device, cause the electronic device to:
identify metadata stored in files identified in accordance with a file system, the metadata being cached by the at least one processor; and
based on the power state satisfying the reference condition, after transmitting the command from the at least one processor to the storage device, transmit at least a portion of the metadata as the data from the at least one processor to the storage device.

15. The non-transitory computer readable storage medium of claim 10, wherein the one or more programs comprise instructions to, when executed by the electronic device, cause the electronic device to:
identify a state of charge (SoC) of a rechargeable battery included in the electronic device; and
based on the SoC being less than a threshold value, identify the power state of the electronic device as satisfying the reference condition.
